# EUROPEAN PATENT APPLICATION

(11) **EP 2 244 054 A1**
(43) Date of publication of application: **27.10.2010**
(21) Application number: 10160412.2
(22) Date of filing: 20.04.2010
(51) Int. Cl.: G01B 5/24, G01B 7/30, G01B 11/26, G01B 21/22

(54) **Device for verifying the geometric parameters of a tool functioning on a work bench**

(30) Priority: 21.04.2009 IT BO20090245
(71) Applicant: CSM S.r.l., 40062 Molinella (Bologna) (IT)
(72) Inventor: Spinelli, Carmine, 40059 Medicina (BOLOGNA) (IT)
(74) Representative: Dall'Olio, Giancarlo

(57) **Abstract**

The device (1) for verifying geometric parameters of a tool (2) operating on a work bench (3) comprises: a laser-technology measuring group (4) which is able to verify the geometric parameters of the tool (2); actuating organs (5), provided laterally of the work bench (3), the actuating organs (5) being able to support the measuring group (4) and to allow transition thereof between an operating configuration, in which the measuring group (4) is arranged on the bench (3) in proximity of an end of the said bench (3) in order to enable verification of the geometric parameters of the tool (2), and an inoperative configuration, in which the measuring group (4) is arranged laterally with respect to the bench (3), such that during a stage of working the tool (2) any fouling of the measuring group (4) is prevented.

## Description

The invention relates to the technical sector concerning mechanical working realised by tools operating on work benches.

In the specific case the present invention relates to a device for verifying geometric parameters of the tools.

A first type of device exists in the prior art, using laser technology, arranged fixed on an end of the work bench. Time by time the tool to be tested is brought up to the laser, for example for evaluation of diameter, depth etc.

The major drawback of such a laser device application is that the tool is subjected to very considerable fouling of the device during working due to the projection of residues and/or shavings which can also lead to damaging the verification device itself.

Of no less relevance are the problems connected to the reduction of the useful space on the work bench in order for the laser device to be kept under protection, especially in the case of pieces being worked on that might jut laterally from the bench itself.

A second type of laser-technology device is also known, positioned on a vertically-mobile turret in proximity of an end of the work bench.

The turret is vertically mobile, laterally of the work bench, from an operating configuration in which the device is substantially coplanar to the work bench, to a rest configuration in which the device is positioned inferiorly of the bench.

This type of laser device, though exhibiting the advantage of preventing fouling during the working stage of the tool, exhibits the drawback of requiring that the tool be taken out of the area of the work bench during its verification (for example for the measurement of diameter, depth etc.).

The aim of the present invention is to provide a device for verifying parameters of a tool operating on a work bench, which obviates fouling of the device during the operating stage of the tool.

A further aim of the present invention consists in providing a device which apart from not being subject to fouling during the tool working stage, does not require the removal of the tool to outside the bench area during the parameter verification stage.

To this is added the desire to provide an extremely functional and versatile device having relatively contained costs, such as to guarantee easy and rapid installation and maintenance thereof.

The above aims are attained in accordance with the contents of the claims.

The characteristics of the invention will be evidenced herein below, in a description of some preferred though not exclusive embodiments, with reference to the accompanying figures of the drawings, in which:
figure 1 is a schematic illustration of the device in a first inoperative configuration;
figure 2 is the same perspective view of the device in a second operating configuration;
figure 3 is a schematic perspective over-view of a further embodiment of the device of the invention;
figure 3A is a larger-scale view of some variants relating to detail A, denoted in figure 3;
figure 3B is a larger-scale view of some variants relating to detail B, denoted in figure 2.

With reference to the figures of the drawings, 1 denotes in its entirety the device for verifying the geometric parameters of a tool 2 operating on a work bench 3.

The device 1 of the present invention comprises a measuring group 4, for example a laser technology group, able to verify the geometric parameters of the tool 2, and actuating organs 5, arranged laterally of the work bench 3 and able to support the measuring group 4.

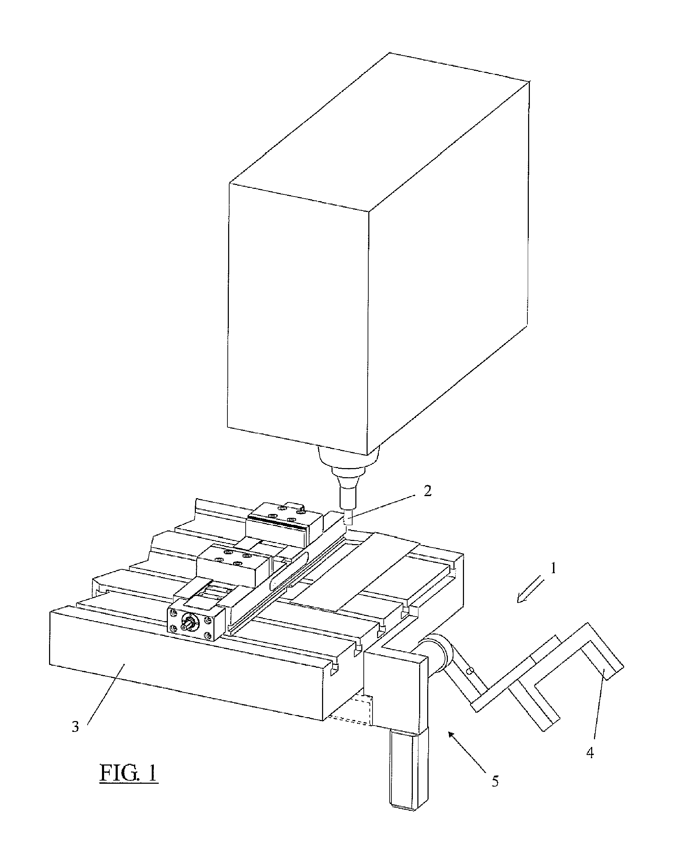

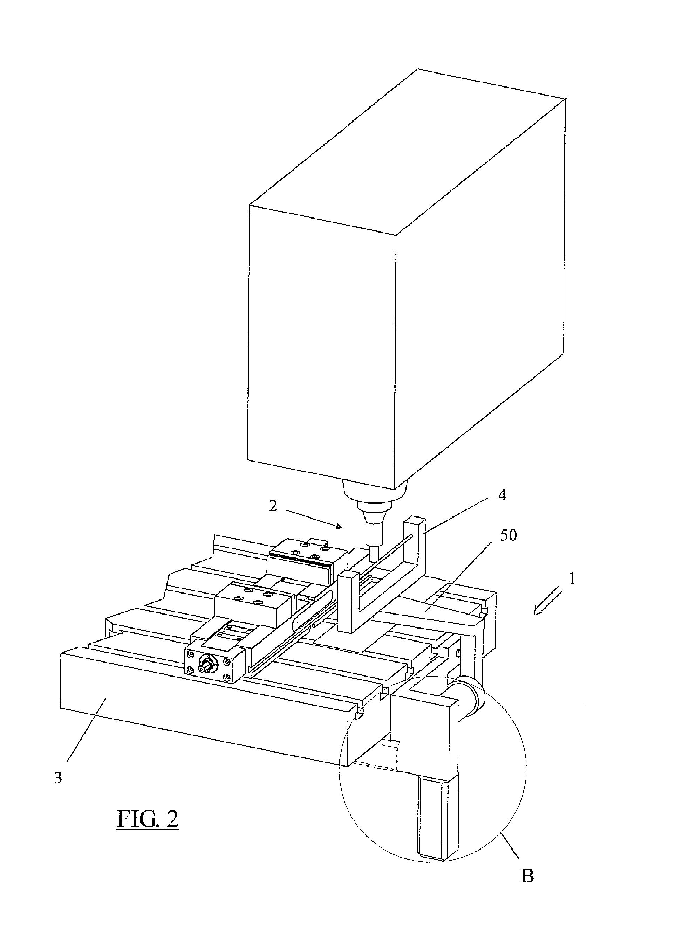

In particular, the actuating organs 5 advantageously enable transition of the measuring group 4 between a work configuration, in which the group 4 is positioned on the bench 3 in proximity of an end thereof, in order to enable verification of the geometric parameters of the tool (figure 2), and an inoperative configuration, in which the group 4 is positioned laterally of the bench 3, such as to prevent any fouling of the group 4 during the tool-working stage (figure 1).

In a preferred embodiment of the measuring group 4, in the inoperative configuration thereof, the group 4 is positioned inferiorly of the work bench 3 in order for better protection thereof in relation to a projection of residues and/or shavings deriving from the working of the tool 2.

In a novel way, the transition trajectory of the measuring group 4 between the above-described working and inoperative configurations describes a circular development, as illustrated in the embodiments represented in the figures of the drawings.

This does not exclude the possibility for the trajectory to generally follow a curved development or portion of development, according to desired specifications.

Specifically, in the illustrated embodiments, the actuating organs 5 are constituted by an arm 50, for supporting the measuring group 4, which arm 50 is keyed on a drive shaft located in proximity of the bench 3 and activated by a motor group 59.

The motor group 59 is advantageously arranged parallel to the work bench 3, inferiorly thereof, with the support arm 50 being constituted by two angularly-arranged segments, preferably at right angles.

During the stage of transition of the measuring group 4 between the operating and inoperative configurations thereof, the support arm 50 is thus moved perpendicular to the work bench 3.

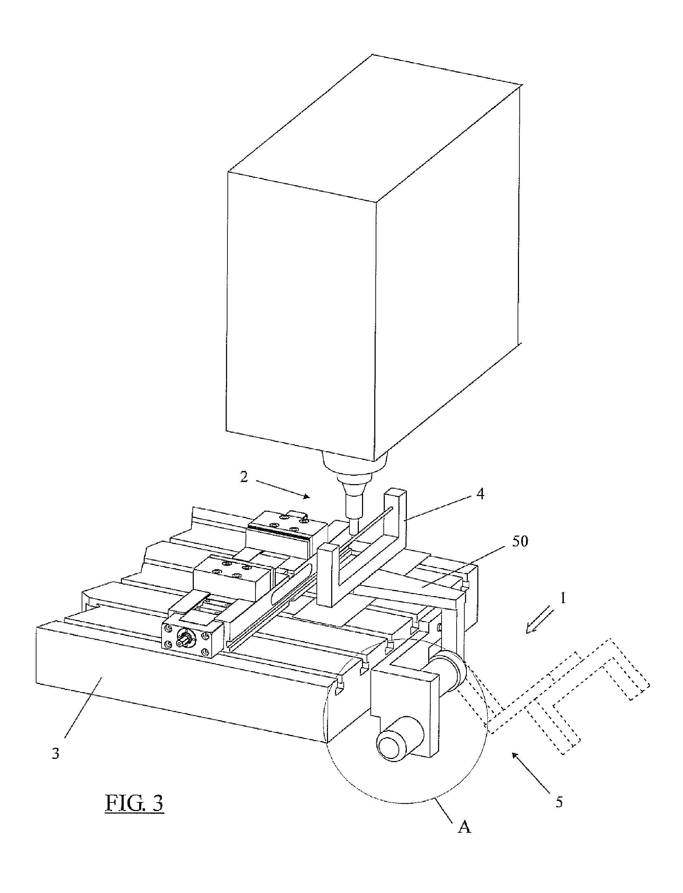

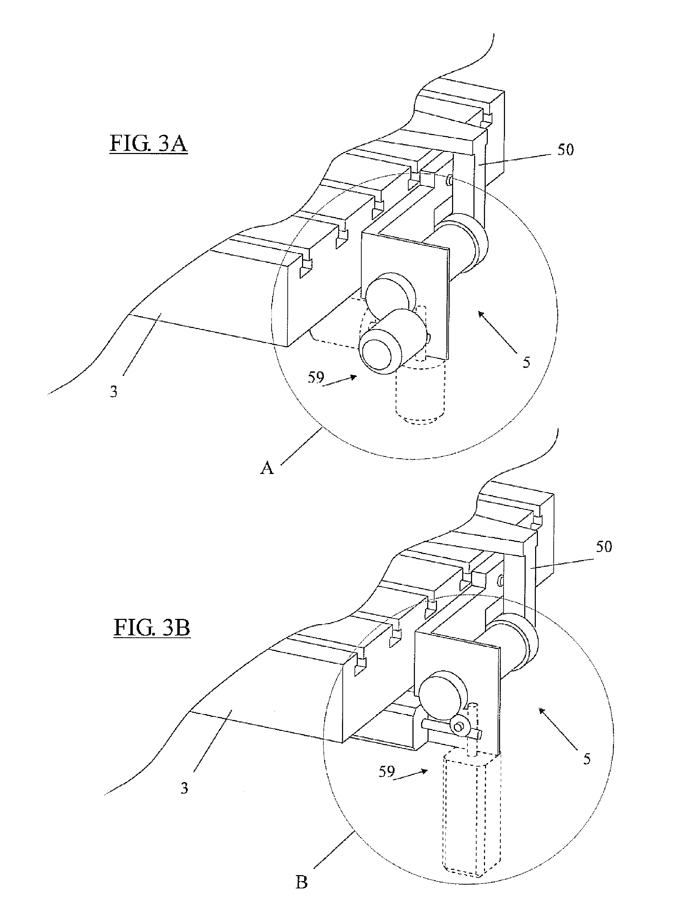

In figures from 1 to 3, two embodiments are illustrated, which differ simply from one another in the type of the motor group 59; in figures 3A, 3B the motor groups 59 have been represented in large-scale in order to better understand them.

The first type of motor group 59 comprises an electric motor, having a vertical or horizontal orientation, on an axis of which a transmission wheel is directly keyed, which transmission wheel is dedicated to actuating the motor on which the arm 50 is keyed (figure 3A).

The second type of motor group 59, on the other hand, includes a jack, with either a vertical or horizontal axis, which moves a rack stem enmeshing with an intermediate transmission wheel dedicated to actuating the drive shaft on which the arm 50 is keyed (figure 3B).

In alternative embodiments, not illustrated for the sake of simplicity, the transition trajectory of the measuring group 4 between the above-indicated operating and inoperative configurations can comprise at least a straight portion.

In particular the trajectory can comprise a horizontal straight portion, for displacing the measuring group 4 parallel to the work bench 3, superiorly thereof, and a straight portion angularly arranged with respect to the horizontal portion in order to bring the measuring group 4 to below the work bench 3.

In order to bring the measuring group 4 to below the work bench 3, the straight portion can be orientated in an inclined position with respect to the horizontal portion, or can alternatively be vertically orientated.

From the above it can clearly be seen how the device for verifying the geometrical parameters of a tool operating on a work bench is able to prevent fouling of the device during the working of the tool, without requiring moving the tool away from the area of the work bench during the parameter verification stage.

This is fundamentally due to the use of the actuating organs, arranged laterally of the work bench, which enable transition of the measuring group between the operative and non-operative configurations in a circular trajectory or a trajectory defined by two straight portions, for example a vertical portion and a horizontal portion.

The device enables verification of the geometric parameters of the tool both before working and during working, in order to prevent any eventual alterations and/or damage that the tool might be subject to during working.

Thanks to the special movements of the measuring group, any verification of the geometric parameters of the tool during the working stage leads to very restricted non-operative stages during the tool-working operation.

By way of example, the verification of the tool parameters can relate to the checking of the shape, diameter, depth etc.

Generally, the present device for verifying the geometric parameters of a tool is very reliable and compact, as well as being able to guarantee high standards of productivity under any working conditions.

The device is clearly and evidently particularly functional and versatile, and is able to guarantee easy and rapid installation and maintenance stages.

The invention has obviously been described purely by way of non-limiting example with reference to the accompanying figures of the drawings, and it is therefore clear that all modifications and variants can be brought thereto without its forsaking the ambit of the following claims.

## Claims

1. Device for verifying geometric parameters of a tool functioning on a work bench ***characterized in that*** it comprises: at least a measuring group (4) which is able to verify the geometric parameters of the tool (2); actuating organs (5), provided laterally with respect to the work bench (3), the actuating organs (5) being able to support the measuring group (4) and to allow transition thereof between an operating configuration, in which the measuring group (4) is arranged on the bench (3) near an end of the said bench (3) in order to enable verification of the geometric parameters of the tool (2), and an inoperative configuration, in which the measuring group (4) is arranged laterally with respect to the bench (3), such that during a stage of working the tool (2) any fouling of the measuring group (4) is prevented.

2. Device according to claim 1, ***characterized in that*** when in the inoperative configuration, the measuring group (4) is arranged below the work bench (3).

3. Device according to claim 1 or 2, ***characterized in that*** a transition trajectory of the measuring group (4) between the aforementioned configurations comprises at least a curved portion.

4. Device according to claim 3, ***characterized in that*** the transition trajectory comprises at least a circular portion.

5. Device according to claim 4, ***characterized in that*** the actuating organs (5) comprise an arm (50) for supporting the measuring group (4), the arm (50) being keyed on a drive shaft provided in proximity of the bench (3) and actuated by a motor group (59).

6. Device according to claim 5, ***characterized in that*** the drive shaft is arranged parallel to and inferiorly of the work bench (3), the support arm (50) being orthogonally movable with respect to the bench (3) and being constituted by at least two angularly-arranged segments.

7. Device according to claim 6, ***characterized in that*** the support arm (50) is composed of two segments arranged at right angles to one another.

8. Device according to claim 1 or 2, ***characterized in that*** a transition trajectory of the measuring group (4) between the configurations comprises at least a straight portion.

9. Device according to claim 8, ***characterized in that*** the trajectory comprises a horizontal straight portion for shifting the measuring group (4) in a parallel direction to the work bench (3), and above the work bench (3), and a straight portion, which is angularly arranged in order to bring the measuring group (4) to a position below the work bench (3).

10. Device according to any one of the preceding claims, wherein said measuring group (4) is of a laser technology type.
